Europäisches Patentamt

(19) European Patent Office

Office européen des brevets

(11) Numéro de publication: **0 041 904**
**B1**

(12) **FASCICULE DE BREVET EUROPEEN**

(45) Date de publication du fascicule du brevet:
14.03.84

(51) Int. Cl.³: **D 01 F 6/48,** C 08 L 27/06,
C 08 L 1/02

(21) Numéro de dépôt: 81420062.2

(22) Date de dépôt: 27.04.81

(54) Solutions capables d'être mises en forme, articles en forme obtenus à partir de ces solutions ainsi que leur procédé d'obtention.

(30) Priorité: 10.06.80 FR 8012922

(43) Date de publication de la demande:
16.12.81 Bulletin 81/50

(45) Mention de la délivrance du brevet:
14.03.84 Bulletin 84/11

(84) Etats contractants désignés:
BE CH DE GB IT LI NL

(56) Documents cités:
DD - A - 76 067
DD - A - 89 003
GB - A - 1 197 322
US - A - 4 097 666

(73) Titulaire: **RHONE-POULENC-TEXTILE, 22, Avenue
Montaigne, F-75008 Paris (FR)**

(72) Inventeur: **Chion, Pierre, 27, rue Alexis Carrel,
F-69500 Bron (FR)**
Inventeur: **Menault, Jacques, 5, Avenue Louis Momet,
F-69260 Charbonnieres-les-Bains (FR)**
Inventeur: **Rodier, Henry, 8, Boulevard de l'Europe,
F-69110 Ste-Foy-Les-Lyon (FR)**
Inventeur: **Sacre, Jean-Paul, 15, rue du Bocage,
F-69330 Meyzieu (FR)**

(74) Mandataire: **Prud'Homme, Simone et al,
RHONE-POULENC-TEXTILE Direction
Technique-Brevets BP 82-41, F-69355 Lyon Cedex 2 (FR)**

# Solutions capables d'être mises en forme, articles en forme obtenus à partir de ces solutions ainsi que leur procédé d'obtention

La présente invention concerne des solutions capables d'être mises sous forme de fils, fibres, films, membranes, pellicules, etc. ainsi qu'un procédé pour leur obtention. Elle concerne également les fils et fibres obtenus à partir de ces solutions ainsi que le procédé d'obtention desdits fils et fibres.

Plus particulièrement la présente invention concerne des solutions conformables contenant de la cellulose et un polychlorure de vinyle, leur procédé d'obtention ainsi que les articles en forme obtenus à partir de telles solutions.

Il est déjà connu d'après le brevet anglais GB-A-1 197 322 de préparer une solution de cellulose dans un mélange de diméthylformamide en présence d'une amine et d'anhydride sulfureux dans laquelle une partie du diméthylformamide peut être remplacée par du diméthylsulfoxyde et de la mélanger avec une solution de polychlorure de vinyle dans du diméthylformamide. Mais les concentrations utilisées (4% en poids pour la solution de cellulose et 2% en poids pour la solution de polychlorure de vinyle) sont trop faibles pour permettre l'obtention de fibres de bonnes propriétés.

Les solutions capables d'être mises en forme selon la présente invention sont constitues de:

— cellulose de degré de polymérisation au moins 200
— polychlorure de vinyle
— diméthylsulfoxyde
— formaldéhyde

dans lesquelles le rapport pondéral cellulose/polychlorure de vinyle est compris entre 0,05 et 0,5, le rapport pondéral formaldéhyde/cellulose est compris entre 0,2 et 2 et la concentration totale de la solution en polymères est comprise entre 6 et 20% en poids.

Pour l'obtention de fils et fibres, on préfère généralement utiliser des solutions de concentration en polymères comprise entre 10 et 18% en poids, de teneur en eau inférieure ou égale à 5000 ppm, et comportant un rapport pondéral cellulose/polychlorure de vinyl compris entre 0,1 et 0,5.

L'invention concerne également un procédé d'obtention des solutions capables d'être mises en forme selon la présente invention par mélange sous agitation à température supérieure ou égale à 80°C d'une solution de polychlorure de vinyle dans le diméthylsulfoxyde et d'une solutions dans un mélange de diméthylsulfoxyde (DMSO) et formaldéhyde, de cellulose de degré de polymérisation au moins 200, préalablement séchée, la concentration totale en polymères étant comprise entre 6 et 20%, et le rapport pondéral cellulose/polychlorure de vinyle entre 0,05 et 0,5.

La présente invention concerne également des filaments, fibres, fils à base de cellulose et de polychlorure de vinyle dans un rapport pondéral cellulose/polychlorure de vinyle compris entre 0,05 et 0,5 de préférence entre 0,1 et 0,5 dans lesquels chaque polymère se présente sous forme de fibrilles sensiblement orientées suivant l'axe de la fibre, étroitement entrecroisées entre elles, les macromolécules de cellulose étant partiellement engagées dans un réseau cristallin tridimensionnel caractéristique de la cellulose II, et le constituant polychlorure de vinyle se présentant sous forme d'un réseau fibrillaire tridimensionnel continu.

Selon les conditions d'obtention, les fibrilles de cellulose peuvent former également un réseau tridimensionnel continu.

Les fils et fibres selon l'invention présentent en outre un pouvoir de rétention d'eau déterminé selon la norme DIN 53-814 d'au moins 15% en poids.

La présente invention concerne enfin un procédé d'obtention desdits fils et fibres, par filage à l'humide des solutions selon l'invention dans lesquelles la concentration totale en polymère est comprise entre 6 et 20% dans un bain coagulant constitué essentiellement d'eau et de diméthylsulfoxyde en proportions respectives de 20 à 80% d'eau et 80 à 20% en volume de diméthylsulfoxyde, ledit bain étant maintenu entre 0 et 60°C, orientation des filaments, élimination du solvant et de préférence séchage desdits filaments.

Pour la préparation des solutions selon l'invention, on peut utiliser de la cellulose I, dite native, de toute provenance, par exemple des linters de coton, de la pate de bois, ou de la cellulose II, possédant un degré de polymérisation d'au moins 200, provenant par exemple de déchets de fibres ou films de cellulose régénérée ou d'alcali-cellulose, neutralisée et lavée.

La cellulose de départ, de degré de polymérisation au moins 200, est déchiquetée, séchée si nécessaire puis on effectue un prégonflement de cette dernière dans le DMSO, éventuellement séché au préalable. Après quoi, le formaldéhyde sous forme de paraformaldéhyde est ajouté et la température élevée jusqu'à une température comprise de préférence entre 90 et 140°C selon le procédé décrit dans la demande française FR-A-2 358 435 de la demanderesse publiée le 10. 02. 1978.

Le rapport pondérale formaldéhyde/cellulose dépend en grande partie de la cellulose utilisée. Il est en général préférable d'utiliser un rapport formaldéhyde/cellulose d'autant plus élevé que la cellulose employée présente une accessibilité moins grande. En pratique, il est préférable pour dissoudre la cellulose I d'utiliser un rapport formaldéhyde/cellulose d'au moins 1, tandis que pour la cellulose II, on peut utiliser un rapport d'au moins 0,6 au stade de la dissolution.

Pour faciliter la transformation ultérieure, ce rapport peut ensuite être éventuellement diminué à une valeur comprise entre 0,2 et 2 par élimination du formaldéhyde, par tout moyen connu, tel que l'entraînement par un gaz anhydre de préférence inerte, ou la distillation sous pression réduite, sans risque de formation de gel ou de coagulation, à condition toutefois que le rapport formaldéhyde/cellulose reste au moins égal à 0,2.

De préférence, le formaldéhyde utilisé dans la présente invention est sous forme de paraformaldéhyde.

Il est souhaitable également que la teneur en eau des différents réactifs soit faible, par exemple que la teneur en eau de la cellulose soit inférieure à 1%, celle du diméthylsulfoxyde inférieure ou égale à 1% et celle du paraformaldéhyde inférieure à 4% en poids.

Par »polychlorure de vinyle«, on entend les homopolymères du chlorure de vinyle cristallisables ou non, ou leurs copolymères contenant au moins 80% en poids d'unités chlorure de vinyle et jusqu'à 20% d'autres composés vinyliques polymérisables avec le chlorure de vinyle (par exemple chlorure de vinylidène, acrylonitrile et des esters vinyliques tels que acétate de vinyle, acrylates, méthacrylates et esters de l'acide maléique ou fumarique, etc.) ou les mélanges d'homopolymère de chlorure de vinyle avec du chlorure de polyvinyle surchloré tels que décrits dans les brevets français FR-A-1 359 178 et FR-E 85 126 de la demanderesse.

Pour la préparation des solutions capables d'être mises forme selon la présente invention, la solution de polychlorure de vinyle est préparée préalablement par dissolution du polychlorure de vinyle tel que défini ci-dessus sous agitation intense et continue pendant au moins 30 minutes à une température supérieure ou égale à 85°C. De préférence, on ajoute à cette solution un stabilisant connu vis-à-vis de la chaleur, tel que des sels d'étain, dans des proportions habituelles, par exemple de l'ordre de 5 parties pour 1000 parties en poids du polymère, pour éviter toute coloration de la solution.

Le mélange des deux solutions est effectué sous agitationtense et par chauffage à une température d'au moins 80°C pendant au moins 30 minutes. La solution ainsi obtenue doit également arriver à la filière à une température d'au moins 80°C.

Les solutions selon l'invention peuvent être utilisées pour l'obtention d'articles très divers tels que fils, fibres, films, feuilles, pellicules, etc.

Les solutions que conviennent pour le filage sont celles de concentration totale en polymères comprise entre 6 et 20%, de préférence 10 et 18% en poids, dont le rapport cellulose/polychlorure de vinyle est compris entre 0,05 et 0,5 et de teneur en eau inférieure à 5000 ppm. Toutefois, pour la réalisation d'un filage industriel régulier etobtention de fibres de bonnes caractéristiques, cette concentration en polymère sera d'au moins 10%, de préférence comprise entre 10 et 18%, et le rapport cellulose/polychlorure de vinyle compris entre 0,1 et 0,5. Lesdites solutions peuvent être filées à sec selon tout procédé connu de l'homme de l'art, par exemple selon la demande de brevet français FR-A 2 372 251 publiée le 23. 06. 78. De préférence, elles sont filées dans un bain coagulant constitué essentiellement d'eau et de diméthylsulfoxyde en proportions respectives comprises entre 20/80 et 80/20 en volume, le bain étant maintenu à une température comprise entre 0 et 60°C. Il peut également contenir, sous forme de solution aqueuse diluée d'ammoniaque, par exemple jusqu'à 5% d'ammoniaque pur ou même plus. Les filaments subissent une orientation moléculaire que peut être effectuée dans le bain coagulant ou ultérieurement par étirage en une ou plusieurs fois, par exemple dans l'air puis dans un bain aqueux, le second étirage étant éventuellement précédé et de préférence suivi d'un séchage, par exemple à température ambiante.

Après leur sortie du bain coagulant, les filaments sont débarrassés du solvant par lavage à l'eau, de préférence après le premier étirage. Le lavage peut également être effectué au moyen de solutions diluées d'ammoniaque pour éviter le collage des brins. Ensuite, les filaments peuvent être séchés et étirés dans l'eau bouillante, puis de nouveau séchés et ensimés. Le taux d'étirage total est généralement d'au moins 1,5 X, de préférence pas supérieur à 9 X. Si nécessaire, les filaments peuvent également subir un traitement de rétraction par exemple dans l'eau bouillante ou la vapeur d'eau.

Les fils et fibres selon la présente invention comprennent des fibrilles de polychlorure de vinyle sensiblement orientées dans le sens de l'axe de la fibre étroitement entremêlée avec des fibrilles de cellulose que sont également orientées dans l'axe de la fibre, les macromolécules de la cellulose étant partiellement engagées dans un réseau cristallin tridimensionnel caractéristique de la cellulose II. Les fibrilles de polychlorure de vinyle forment un réseau tridimensionnel continu tout le long des filaments. La longueur des fibrilles de cellulose augmente avec le rapport pondéral

$$\frac{\text{cellulose}}{\text{polychlorure de vinyle}}.$$

Selon les conditions d'obtention par exemple l'étirage, le rapport

$$\frac{\text{cellulose}}{\text{polychlorure de vinyle}},$$

les fibrilles de cellulose peuvent former également un réseau tridimensionnel continu.

Les fils et fibres ainsi obtenus possèdent à la fois un bon pouvoir absorbant, une bonne affinité tinctoriale, une densité plus faible, et une meilleure stabilité thermique, en particulier par rapport aux fibres de polychlorure de vinyle pur.

Bien que les qualités mécaniques de tels fils et fibres ne soient pas notablement améliorées par rapport aux fibres de polychlorure de vinyle, le pouvoir de rétention d'eau desdits fils et fibres, déterminé selon la norme DIN 53-814, est d'au moins 20% en poids alors que celui des fibres de polychlorure de vinyle exemptes de cellulose est de l'ordre de 3% enpoids. Cette caractéristique améliorée, que la présence seule de cellulose ne suffit pas à expliquer, donne aux fibres un grand confort au porter en absorbant rapidement l'humidité corporelle qui peut ensuite s'évaporer de la surface du textile.

Il est également possible d'obtenir, à partir de solutions selon l'invention, des films, feuilles, pellicules, etc. selon tout procédé connu.

Les exemples qui suivent dans lesquels les parties et pourcentages, sauf indication contraire, s'entendent en poids sont donnés à titre indicatif mais non limitatif pour illustrer l'invention.

### Exemple 1

A — On prépare une solution de polychlorure de vinyle à 12,5% en poids dans du diméthylsulfoxyde par agitation continue pendant 30 min à une température d'au moins 85°C.

B — On prépare séparément une solution de cellulose à 8% en poids dans le diméthylsulfoxyde obtenue de la manière suivante:

106 g de pâte Viscokraft de degré de polymérisation 450, comportant 6% en poids d'humidité sont séchés puis introduits dans 1115 g de diméthylsulfoxyde contenant 500 ppm d'eau. On ajoute 125 g de paraformaldéhyde à 96% en poids (rapport paraformaldéhyde/cellulose: 1,20).

On chauffee pendant 5 heures à 135°C sous agitation. Après dissolution, on élimine une partie du paraformaldéhyde par barbotage d'un courant d'azote sec à 120°C ce qui abaisse le rapport paraformaldéhyde/cellulose à 0,35.

On effectue le mélange des deux solutions à une température supérieure à 85°C sous agitation intense pendant au moins 30 minutes dans les proportions nécessaires pour obtenir un rapport cellulose/polychlorure de vinyle de 0,2 et la solution résultante de concentration en polymère 11,4% en poids, maintenue à cette température, est amenée è une filière de 64 orifices de diamètre 0,055 mm chacun. Les filaments sont coagulés dans un bain maintenu à 27°C contenant un mélange DMSO/eau en proportion 60/40 en volume.

Les filaments sont ensuite étirés dans l'air à un taux de 1,4 X puis lavés à l'eau ammoniaquée (30 g/l) à contre-courant à température ambiante, séchés à température ambiante, étirés de nouveau dans l'eau bouillante à un taux de 2 X puis de nouveau séchés et ensimés.

Les filaments ainsi obtenus sont constitués de deux réseaux fibrillaires continus vus au microscope optique, par dissolution de l'une ou l'autre phase alternativement. En coupe, ils présentent des inclusions de cellulose de forme dentelée et placées au hasard à l'intérieur d'une matrice de polychlorure de vinyle.

Les filaments présentent des qualités mécaniques moyennes, et un pouvoir d'absorption particulièrement élevé selon la norme DIN 53-814 que ne suffit pas à expliquer le rapport cellulose/polychlorure de vinyle de 0,2. En effet, le pouvoir d'absorption est de 50% en poids alors que celui des fibres à base de polychlorure de vinyle seul est de 3% en poids.

### Exemple 2

On mélange les deux solutions de l'exemple 1 à une température d'environ 80°C sous agitation intense pendant 1 heure dans les proportions nécessaires pour obtenir un rapport cellulose/polychlorure de vinyle de 0,1 et une solution résultante de concentration en polymère 11,9% en poids, maintenue à cette température, est amenée à une filière de 200 orifices de diamètre 0,09 mm chacun. Les filaments sont coagulés dans un bain maintenu à 50°C contenant un mélange DMSO/eau en proportion 56/44 en volume et auquel on rajoute 10% en volume d'une solution aqueuse d'ammoniaque à 20% en poids.

Les filaments sont ensuite étirés dans l'air à un taux de 1,17 X puis lavés à l'eau ammoniaquée (30 g/l) à contre-courant à température ambiante, étirés de nouveau dans l'eau bouillante à un taux de 4,64 X puis séchés sous tension sur des rouleaux maintenus à 150°C (taux total d'étirage 5,42 X), et ensimés.

Les filaments présentent les caractéristiques mécaniques suivantes:

| | |
|---|---|
| — ténacité g/tex | 20,83 |
| — allongement % | 15,28 |
| — module d'élasticité g/tex | 404 |
| — pouvoir d'absorption % en poids (selon norme DIN 53-814) | 59,9 |
| — densité | 1,3365 |
| — retrait thermique à 100°C % | 25,84 |
| — retrait maximum (à 160°C) % | 51,68 |

A titre de comparaison, on a mesuré le retrait thermique de filaments de polychlorure de vinyle seul obtenus à partir de la solution A de l'exemple 1, dans des conditions identiques:

| | |
|---|---|
| Retrait thermique à 100°C % | 49,05 |
| Retrait maximum (à 155°C) % | 68,98 |

### Exemple 3

On mélange les deux solutions de l'exemple 1 à une température d'environ 80°C sous agitation intense pendant 1 heure dans les proportions nécessaires pour obtenir un rapport cellulose/polychlorure de vinyle de 0,2 et la solution résultante de concentration en polymère 11,4% en poids, maintenue à 80°C est amenée à une filière de 200 orifices de diamètre 0,09 mm chacun. Les filaments sont coagulés dans un bain maintenu à 50°C contenant un mélange DMSO/eau en proportion 56/44 en volume et auquel on rajoute 10% en volume d'une solution aqueuse d'ammoniaque à 20% en poids.

Les filaments sont ensuite étirés dans l'air à un taux de 1,09 X puis lavés à l'eau ammoniaquée (30 g/l) à contre-courant à température ambiante, étirés de nouveau dans l'eau bouillante à un taux de 4,58 X puis séchés sous tension sur des rouleaux maintenus à 150°C (taux total d'étirage 5 X), et ensimés.

Les filaments présentent les caractéristiques mécaniques suivantes:

| | | |
|---|---|---|
| — | ténacité g/te | 16,65 |
| — | allongement % | 17,25 |
| — | module d'élasticité g/tex | 257 |
| — | pouvoir d'absorption % en poids (selon norme DIN 53-814) | 55,1 |
| — | densité | 1,3355 |
| — | retrait thermique à 100°C % | 18,25 |
| — | retrait maximum (à 157°C) % | 37,49 |

Exemple 4

On effectue le mélange des deux solutions de l'exemple 1 à une température d'environ 80°C sous agitation intense pendant 1 heure dans les proportions nécessaires pour obtenir un rapport cellulose/polychlorure de vinyle de 0,3 et la solution résultante de concentration en polymère 11,06%, maintenue à 80°C est amenée à une filière de 200 orifices de diamètre 0,09 mm chacun. Les filaments sont coagulés dans un bain maintenu à 50°C contenant un mélange DMSO/eau en proportion 56/44 en volume auquel on rajoute 10% en volume d'une solution d'ammoniaque à 20% en poids.

Les filaments sont ensuite étirés dans l'air à un taux de 1,17 X puis lavés à l'eau à contre-courant à température ambiante, étirés de nouveau dans l'eau bouillante à un taux de 4,64 X puis séchés sous tension sur des rouleaux maintenus à 150°C (taux total d'étirage 5,42 X), et ensimés.

Les filaments présentent les caractéristiques mécaniques suivantes:

| | | |
|---|---|---|
| — | ténacité g/tex | 12,62 |
| — | allongement % | 55 |
| — | module d'élasticité g/tex | 153 |
| — | pouvoir d'absorption % en poids (selon norme DIN 53-814) | 45,7 |
| — | densité | 1,3658 |
| — | retrait thermique à 100°C % | 18,97 |
| — | retrait maximum (à 153°C) % | 43,16 |

## Revendications

1. Solutions capables d'être mises sous forme de fils, fibres, films, membranes, pellicules, caractérisées par le fait qu'elles sont constituées de

— cellulose de degré de polymérisation au moins 200
— polychlorure de vinyle
— diméthylsulfoxyde
— formaldéhyde

le rapport pondéral cellulose/polychlorure de vinyle étant compris entre 0,05 et 0,5, le rapport pondéral formaldéhyde/cellulose entre 0,2 et 2 et la concentration totale de la solution en polymères étant comprise entre 6 et 20% en poids.

2. Solutions selon la revendication 1, caractérisées par le fait que la concentration totale en polymères est comprise entre 10 et 18% en poids.

3. Solutions selon la revendication 1, caractérisées par le fait que la teneur en eau est inférieur à 5000 ppm.

4. Solutions selon la revendication 1, caractérisées par le fait que le rapport pondéral cellulose/polychlorure de vinyle est compris entre 0,1 et 0,5.

5. Procédé pour l'obtention de solutions selon la revendication 1, caractérisé par le fait que l'on mélange sous agitation pendant au moins 30 minutes à une température supérieure ou égale à 80°C une solution de polychlorure de vinyle à une solution, dans un mélange de diméthylsulfoxyde et formaldéhyde, de cellulose de degré de polymérisation au moins 200, préalablement séchée, avec un rapport pondéral cellulose/polychlorure de vinyle compris entre 0,05 et 0,5.

6. Procédé selon la revendication 5, caractérisé par le fait que le polychlorure de vinyle est sous forme de solution dans du diméthylsulfoxyde.

7. Procédé selon la revendication 6, caractérisé par le fait que la solution de polychlorure de vinyle contient un stabilisant vis-à-vis de la chaleur.

8. Fibres, filaments, fils, à base de cellulose et de polychlorure de vinyle, caractérisés par le fait que le rapport pondéral cellulose/polychlorure de vinyle est compris entre 0,1 et 0,5, que chaque polymère se présente sous forme de fibrilles sensiblement orientées suivant l'axe de la fibre et entrecroisées étroitement, que les macromolécules de cellulose sont partiellement engagées dans un réseau cristallin tridimensionnel caractéristique de la cellulose II, et que les fibrilles de polychlorure de vinyle constituent un réseau tridimensionnel continu.

9. Fils et fibres selon la revendication 8, caractérisés par le fait qu'ils présentent un pouvoir de rétention d'eau déterminé selon la norme DIN 53-814 d'au moins 15% en poids.

10. Procédé pour l'obtention de fils et fibres selon la revendication 8, caractérisé par le fait que l'on file une solution maintenue à une température d'au moins 80°C constituée de cellulose de degré de polymérisation au moins 200, d'un polychlorure de vinyle, de diméthylsulfoxyde et de formaldéhyde, le rapport pondéral cellulose/polychlorure de vinyle étant compris entre 0,05 et 0,5, le rapport pondéral formaldéhyde/cellulose entre 0,2 et 2 et la concentration totale en polymère entre 6 et 20% en poids, dans un bain coagulant constitué essentiellement d'eau et de diméthylsulfoxyde en proportions respectives de 20/80 à 80/20 en volume, ledit bain étant maintenu entre 0° et 60°C, que l'on oriente ensuite les filaments et qu'on les débarasse de leur solvant.

11. Procédé selon la revendication 10, caractérisé par le fait que la solution a une concentration totale en polymère comprise entre 10 et 18% en poids.

12. Procédé selon la revendication 10, caractérisé par le fait que le bain coagulant contient une faible proportion d'ammoniaque.

13. Procédé selon la revendication 10, caractérisé par le fait que l'on oriente les filaments par étirage après lavage.

14. Procédé selon la revendication 10, caractérisé par le fait qu'on lave les filaments à l'eau.

15. Procédé selon la revendication 10, caractérisé par le fait qu'on lave les filaments au moyen d'une solution aqueuse d'ammoniaque diluée.

16. Procédé selon la revendication 10, caractérisé par le fait que les filaments sont séchés après étirage.

## Patentansprüche

1. Lösungen, die befähigt sind, in Fäden, Fasern, Filme, Membranen, Häutchen verformt zu werden, dadurch gekennzeichnet, daß sie bestehen aus

— Cellulose mit einem Polymerisationsgrad von wenigstens 200,
— Polyvinylchlorid,
— Dimethylsulfoxyd,
— Formaldehyd,

wobei das Gewichtsverhältnis Cellulose/Polyvinylchlorid zwischen 0,05 und 0,5 liegt, das Gewichtsverhältnis Formaldehyd/Cellulose zwischen 0,2 und 2 ist und die Gesamtkonzentration der Lösung an Polymeren zwischen 6 und 20 Gewichtsprozent liegt.

2. Lösungen gemäß Anspruch 1, dadurch gekennzeichnet, daß die Gesamtkonzentration an Polymeren zwischen 10 und 18 Gewichtsprozent ist.

3. Lösungen gemäß Anspruch 1, dadurch gekennzeichnet, daß der Gehalt an Wasser unterhalb von 5000 ppm ist.

4. Lösungen gemäß Anspruch 1, dadurch gekennzeichnet, daß das Gewichtsverhältnis Cellulose/Polyvinylchlorid zwischen 0,1 und 0,5 liegt.

5. Verfahren zur Erzielung von Lösungen gemäß Anspruch 1, dadurch gekennzeichnet, daß man unter Rühren während wenigstens 30 Minuten bei einer Temperatur über oder gleich 80°C eine Lösung von Polyvinylchlorid mit einer Lösung von Cellulose mit einem Polymerisationsgrad von wenigstens 200 in einem Gemisch von Dimethylsulfoxyd und Formaldehyd, die vorher getrocknet wurde, mit einem Gewichtsverhältnis Cellulose/Polyvinylchlorid zwischen 0,05 und 0,5 vermischt.

6. Verfahren gemäß Anspruch 6, dadurch gekennzeichnet, daß das Polyvinylchlorid in Form einer Lösung in Dimethylsulfoxyd vorliegt.

7. Verfahren gemäß Anspruch 6, dadurch gekennzeichnet, daß die Lösung von Polyvinylchlorid einen Stabilisator gegenüber Hitze enthält.

8. Fasern, Filamente, Fäden auf Basis von Cellulose und Polyvinylchlorid, dadurch gekennzeichnet, daß das Gewichtsverhältnis Cellulose/Polyvinylchlorid zwischen 0,1 und 0,5 liegt, daß jedes Polymeres in Form von Fibrillen vorliegt, die im wesentlichen entlang der Axe der Faser orientiert und eng durchkreuzt sind, daß die Cellulosemakromoleküle teilweise in einem dreidimensionalen, für die Cellulose II charakteristischen Kristallgitter eingebunden sind und daß die Polyvinylchloridfibrillen ein kontinuierliches dreidimensionales Gitter bilden.

9. Fäden und Fasern gemäß Anspruch 8, dadurch gekennzeichnet, daß sie ein Wasserzurückhaltevermögen, bestimmt nach der Norm DIN 53-814, von wenigstens 15 Gewichtsprozent aufweisen.

10. Verfahren zur Herstellung von Fäden und Fasern gemäß Anspruch 8, dadurch gekennzeichnet, daß man eine bei einer Temperatur von wenigstens 80°C gehaltene Lösung, die aus Cellulose mit einem Polymerisationsgrad von wenigstens 200, einem Polyvinylchlorid, Dimethylsulfoxyd und Formaldehyd besteht, wobei das Gewichtsverhältnis Cellulose/Polyvinylchlorid zwischen 0,05 und 0,5, das Gewichtsverhältnis Formaldehyd/Cellulose zwischen 0,2 und 2 liegt und die Gesamtkonzentration an Polymeren zwischen 6 und 20 Gewichtsprozent beträgt, in ein Fällbad verspinnt, das im wesentlichen aus Wasser und Dimethylsulfoxyd in Mengenverhältnissen 20/80 bis 80/20 in Vol. besteht, wobei dieses Bad zwischen 0° und 60°C gehalten wird, und daß man dann die Filamente orientiert und daß man sie von ihrem Lösungsmittel befreit.

11. Verfahren gemäß Anspruch 10, dadurch gekennzeichnet, daß die Lösung eine Gesamtkonzentration an Polymeren zwischen 10 und 18 Gewichtsprozent besitzt.

12. Verfahren gemäß Anspruch 10, dadurch gekennzeichnet, daß das Fällbad einen schwachen Anteil an Ammoniak enthält.

13. Verfahren gemäß Anspruch 10, dadurch gekennzeichnet, daß man die Filamente nach dem Waschen durch Verstrecken orientiert.

14. Verfahren gemäß Anspruch 10, dadurch gekennzeichnet, daß man die Filamente mit Wasser wäscht.

15. Verfahren gemäß Anspruch 10, dadurch gekennzeichnet, daß man die Filamente mittels einer verdünnten wässerigen Ammoniaklösung wäscht.

16. Verfahren gemäß Anspruch 10, dadurch gekennzeichnet, daß die Filamente nach dem Verstrecken getrocknet werden.

## Claims

1. Solutions which can be shaped to yarns, fibres, films, membranes, pellicules, characterised in that they consist of

cellulose having a degree of polymerisation of at least 200,
polyvinyl chloride,
dimethylsulphoxide and
formaldehyde,

the weight ratio cellulose/polyvinyl chloride being between 0.05 and 0.5, the weight ratio formaldehyde/cellulose being between 0.2 and 2 and the total polymer concentration of the solutions being between 6 and 20% by weight.

2. Solutions according to Claim 1, characterised in that the total polymer concentration is between 10 and 18% by weight.

3. Solutions according to Claim 1, characterised in that the water content is less than 5,000 ppm.

4. Solutions according to Claim 1, characterised in that the ratio cellulose/polyvinyl chloride is between 0,1 and 0,5 by weight.

5. Process for the manufacture of solutions according to Claim 1, characterised in that a solution of polyvinyl chloride is mixed, whilst stirring, during 30 minutes at a temperature which is above or equal to 80° C, with a solution in a mixture of dimethyl sulphoxide and formaldehyde, of cellulose having a degree of polymerisation of a least 200, which has been dried beforehand, the weight ratio cellulose/polyvinyl chloride being between 0.05 and 0.5.

6. Process according to Claim 5, characterised in that the polyvinyl chloride is in the form of a solution in dimethyl sulphoxide.

7. Process according to Claim 6, characterised in that the solution of polyvinyl chloride contains a heat stabiliser.

8. Fibres, filaments and yarns based on cellulose and on polyvinyl chloride, characterised in that the weight ratio cellulose/polyvinyl chloride is between 0.1 and 0.5, in that each polymer is present in the form of fibrils substantially orientated along the axis of the fibre and closely interlaced, in that the cellulose macromolecules are partially involved in a threedimensional crystal lattice characteristic of cellulose II, and in that the polyvinyl chloride fibrils form a continuous threedimensional lattice.

9. Yarns and fibres according to Claim 8, characterised in that they possess a water retention capacity of at least 15% by weight, determined in accordance with DIN Standard Specification 55,814.

10. Process for the manufacture of yarns and fibres according to Claim 8, characterised in that a solution, maintained at a temperature of at least 80° C, consisting of cellulose having a degree of polymerisation of at least 200, a polyvinyl chloride, dimethyl sulphoxide and formaldehyde, the weight ratio cellulose/polyvinyl chloride being between 0.05 and 0.5, the weight ratio formaldehyde/cellulose being between 0.2 and 2 and the total polymer concentration being between 6 and 20% by weight, is spun into a coagulating bath essentially consisting of water and dimethyl sulphoxide in respective proportions of 20/80 to 80/20 by volume, the said bath being kept at between 0 and 60° C, in that the filaments are then orientated and in that they are freed of their solvent.

11. Process according to Claim 10, characterised in that the solution has a total polymer concentration of between 10 and 18% by weight.

12. Process according to Claim 10, characterised in that the coagulating bath contains a small proportion of ammonia.

13. Process according to Claim 10, characterised in that the filaments are orientated by stretching after washing.

14. Process according to Claim 10, characterised in that the filaments are washed with water.

15. Process according to Claim 10, characterised in that the filaments are washed by means of a dilute aqueous solution of ammonia.

16. Process according to Claim 10, characterised in that the filaments are dried after stretching.